# FASCICULE DE BREVET EUROPEEN

(11) **EP 3 226 389 B1**
(45) Date de publication et mention de la délivrance du brevet: **15.01.2020**
(21) Numéro de dépôt: 17163757.2
(22) Date de dépôt: 30.03.2017
(51) Int. Cl.: H02K 5/22, H02K 7/102, H02K 15/00, B61C 9/38, H02K 15/16, H02K 5/18, H02K 5/173

(54) **MOTEUR DE VÉHICULE FERROVIAIRE ET PROCÉDÉ D'INSTALLATION D'UN MOTEUR**
MOTOR EINES SCHIENENFAHRZEUGS, UND VERFAHREN ZUR MONTAGE EINES MOTORS
RAILWAY VEHICLE MOTOR AND METHOD FOR MOUNTING THE MOTOR

(30) Priorité: 30.03.2016 FR 1652725
(43) Date de publication de la demande: 04.10.2017
(73) Titulaire: ALSTOM Transport Technologies, 93400 Saint-Ouen (FR)
(72) Inventeur: ROBBE, Gilles, 25660 Montfaucon (FR)
(74) Mandataire: Lavoix

(56) Documents cités:
- DE-B- 1 101 597
- DE-T5-112012 000 043
- JP-B2- 5 855 596
- US-A- 3 440 463
- US-A1- 2012 062 076
- US-A1- 2012 228 990

## Description

La présente invention concerne un moteur de véhicule ferroviaire comprenant un arbre moteur et un carter de l'arbre moteur, l'arbre moteur étant mobile en rotation par rapport au carter.

Un tel moteur est par exemple destiné à être monté sur un bogie de véhicule ferroviaire.

Il est connu de l'état de la technique de protéger un tel moteur et plus particulièrement l'arbre moteur des vibrations induites, dues par exemple aux déplacements du moteur avant et après son montage sur le bogie, entre le site de production du moteur et celui du bogie, et entre le site de production du bogie et le site de montage du véhicule ferroviaire recevant le bogie.

Ces vibrations induites génèrent, par exemple, des mouvements radiaux ou axiaux de l'arbre moteur entrainant une usure prématurée des roulements de l'arbre moteur.

Un moyen de protéger l'arbre moteur contre ces vibrations est, par exemple, de lier rigidement cet arbre moteur au boitier externe de protection du moteur, ou carter du moteur afin d'immobiliser l'arbre et d'empêcher les mouvements relatifs entre l'arbre et le carter.

Cette liaison est faite, par exemple, par l'intermédiaire de barres amovibles externes, fixées par vissage sur l'arbre moteur, ainsi que sur le carter.

De telles barres doivent cependant être démontées avant le montage de l'accouplement sur l'arbre moteur pour l'intégration de celui-ci dans le bogie.

Après l'intégration du moteur dans le bogie, les barres de liaison ne peuvent être remontées sur l'arbre moteur.

L'arbre moteur est alors sans protection lors du transport du bogie motorisé en vue de compléter son intégration dans le véhicule ferroviaire.

L'arbre moteur est donc toujours soumis à des vibrations entrainant une usure prématurée, ou « faux brinelling » (brinellage), des roulements lors de ce transport.

US 2012/062076 décrit un moteur de véhicule ferroviaire comprenant un élément de blocage des mouvements de l'arbre moteur par rapport au carter, ledit élément de blocage étant mobile entre une position de blocage dans laquelle ledit élément de blocage est appliqué contre l'arbre moteur et une position escamotée dans laquelle l'élément est écarté de l'arbre moteur.

US 3440463 décrit un moteur de scie comprenant un frein permettant d'arrêter le mouvement de l'arbre moteur lorsque l'alimentation électrique du moteur est coupée.

Un des buts de l'invention est de proposer un moteur de véhicule ferroviaire permettant d'empêcher les débattements de l'arbre moteur, jusqu'à la mise en service du bogie.

A cet effet, l'invention a pour objet un moteur de véhicule ferroviaire du type précité, dans lequel le carter comprend au moins un élément de blocage des mouvements de l'arbre moteur par rapport au carter, ledit élément de blocage étant mobile entre une position de blocage dans laquelle ledit élément de blocage est appliqué contre l'arbre moteur, ou contre une pièce liée en rotation à l'arbre moteur, et empêche les débattements de l'arbre moteur par rapport au carter et une position escamotée dans laquelle l'élément est écarté de l'arbre moteur et permet le mouvement de celui-ci par rapport au carter.

Grâce à l'invention, il est possible d'obtenir un moteur de véhicule ferroviaire, comprenant des éléments de blocage de l'arbre moteur, montés de façon permanente sur celui-ci. Les éléments de blocage sont intégrables au carter de l'arbre moteur, protégeant de l'arbre moteur des débattements de celui-ci par rapport au carter, lors de son transport.

Le moteur selon l'invention peut comprendre l'une ou plusieurs des caractéristiques suivantes, prise(s) isolément ou suivant toute combinaison techniquement possible :
- l'élément de blocage comprend au moins un patin de contact comprenant une surface en contact avec l'arbre moteur ou avec une pièce liée en rotation à l'arbre moteur ;
- l'élément de blocage comprend au moins un élément de maintien en position de chaque patin ;
- le patin s'étend selon une direction sensiblement radiale autour de l'arbre moteur ;
- le patin de contact comporte un anneau torique ;
- l'élément de maintien en position comprend une surface d'appui en contact avec le patin ;
- l'élément de maintien comprend une vis, déplaçable entre une position escamotée de libération du patin de contact, et une position active de maintien du patin au contact de l'arbre moteur ;
- l'élément de maintien est accessible depuis l'extérieur du moteur ; et
- le moteur comporte une pluralité d'éléments de blocage répartis de façon régulière autour de l'arbre moteur.

L'invention a également pour objet un procédé d'installation d'un moteur tel que décrit ci-dessus, sur un bogie de véhicule ferroviaire comprenant les étapes suivantes :
- montage du moteur dans le bogie, les éléments de blocage étant en position de blocage de l'arbre moteur,
- accouplement de l'arbre moteur avec un dispositif d'entrainement du bogie, le procédé comprenant une étape de déplacement de l'élément de blocage de sa position de blocage à sa position escamotée, avant ou après accouplement.

L'invention sera mieux comprise à la lecture de la description qui va suivre, donnée uniquement à titre d'exemple et faite en se référant aux dessins annexés sur lesquels :
- la figure 1 est une représentation schématique de dessus d'un bogie comprenant un moteur selon l'invention ;
- la figure 2 est une vue en perspective, de trois quarts, d'une partie du moteur selon l'invention,
- la figure 3 est une vue en coupe dans un plan transversal du moteur selon l'invention ;
- la figure 4 est une coupe d'une partie du moteur selon l'invention dans un plan longitudinal de l'arbre moteur ;
- la figure 5 est une coupe d'une partie du moteur selon une variante de l'invention dans un plan longitudinal de l'arbre moteur.

Dans tout ce qui suit, le terme « longitudinal » est défini par rapport à la direction selon laquelle l'arbre du moteur s'étend et le terme « transversal » est défini selon un plan perpendiculaire à la direction longitudinale.

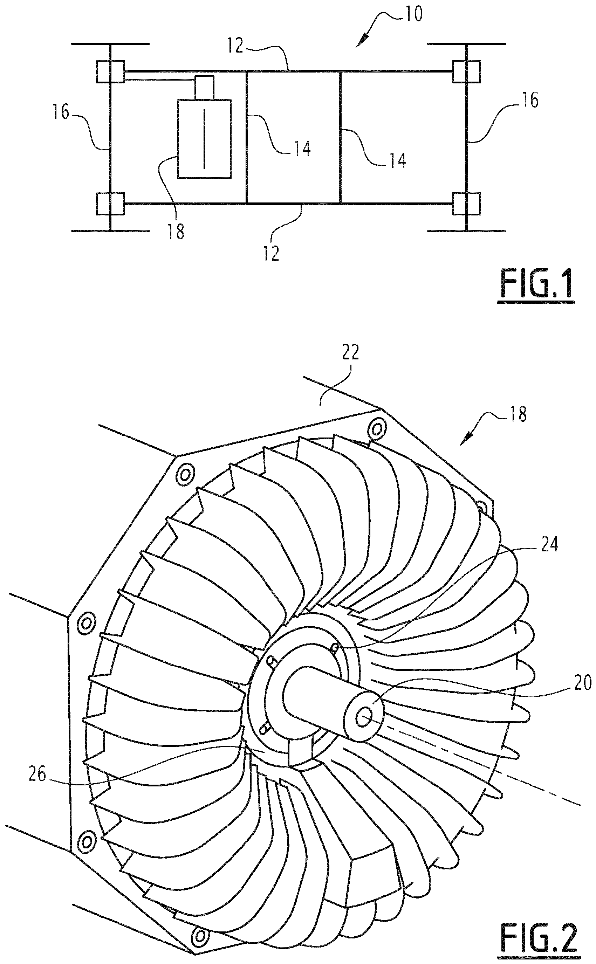

En référence à la figure 1, le bogie 10 comprend un châssis comprenant deux longerons 12 reliés par deux traverses 14.

Deux essieux 16 sont montés mobiles en rotation par rapport au châssis à chacune des extrémités des longerons 12.

Les essieux 16 comprennent chacun à leur extrémité deux roues permettant au bogie de se déplacer sur une voie ferrée.

Sur le bogie 10 est positionné un moteur 18 selon l'invention.

Le moteur 18 coopère, par exemple, par l'intermédiaire d'un réducteur, formé par un système de pignons, avec un des essieux 16 afin d'entraîner en rotation cet essieu. La structure du bogie décrite ci-dessus est connue de l'homme du métier et n'est décrite qu'à titre d'exemple, le bogie pouvant présenter une structure différente et comprendre plus d'un moteur.

Une partie du moteur 18 du véhicule ferroviaire est représentée sur la figure 2.

Le moteur 18 comprend un arbre moteur 20 et un carter 22 de l'arbre moteur 20, formant un boîtier de protection de l'arbre moteur.

L'arbre moteur 20 fait saillie hors du carter 22, et est mobile en rotation par rapport à celui-ci.

Le carter 22 comprend au moins un élément de blocage 24 des mouvements de l'arbre moteur 20 par rapport au carter 22.

L'élément de blocage 24 est mobile entre une position de blocage dans laquelle l'élément de blocage est appliqué contre l'arbre moteur 20, ou contre une pièce liée en rotation à l'arbre moteur 20, et une position escamotée dans laquelle l'élément de blocage 24 est écarté de l'arbre moteur 20 permettant le mouvement de celui-ci par rapport au carter.

Dans sa position de blocage, l'élément de blocage 24 est appliqué contre l'arbre moteur 20, et empêche les débattements de l'arbre moteur 20 par rapport au carter 22 du moteur 18. Par débattement, on entend plus particulièrement les mouvements radiaux de l'arbre 20, c'est-à-dire les mouvements selon les directions transversales de l'arbre 20 par rapport au carter 22. Le blocage a un effet radial et un effet axial, c'est-à-dire que le blocage empêche également un déplacement de l'arbre moteur 20 selon son axe par rapport au carter 22.

Dans un mode de réalisation, l'élément de blocage 24 en position de blocage autorise la rotation de l'arbre moteur 20 autour de son axe mais empêche le mouvement transversal de celui-ci.

Selon le mode de réalisation de la figure 2, l'élément de blocage est monté sur un boîtier palier 26 coopérant avec l'arbre moteur 20.

L'élément de blocage 24 est accessible depuis l'extérieur du boîtier palier 26 de protection des roulements, pour permettre la manipulation de celui-ci par des techniciens.

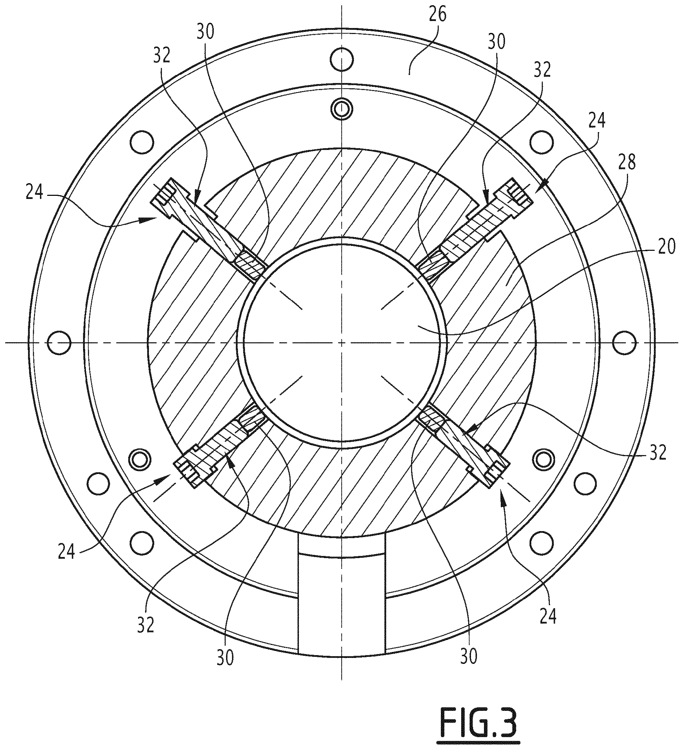

En référence à la figure 3, qui est une vue en coupe dans un plan transversal de l'arbre moteur 20 au niveau du boîtier du palier 26, l'élément de blocage 24 coopère avec une partie fixe 28 du boîtier palier 26.

Plus précisément, l'élément de blocage 24 coulisse radialement, par exemple, dans un alésage de la partie fixe 28.

Cette partie fixe 28 du boîtier palier 26 est aussi appelée couvercle.

L'élément de blocage 24 comprend au moins un matériau polymère faisant contact avec l'arbre moteur 20 en position de blocage.

A l'intérieur de cette partie fixe 28 du boîtier palier 26, l'élément de blocage 24 comprend au moins un patin de contact 30, comprenant une surface de contact avec l'arbre moteur 20.

Le patin de contact 30 comprend, par exemple, un matériau polymère.

Le patin de contact 30 s'étend selon une direction sensiblement radiale autour de l'arbre moteur 20.

L'élément de blocage 24 comprend au moins un élément de maintien en position 32 du patin de contact 30.

L'élément de maintien en position 32 comprend une surface d'appui en contact avec le patin 30.

Dans une variante, l'élément de maintien en position 32 est rigidement solidaire du patin 30.

Avantageusement, le moteur 18 comporte une pluralité d'éléments de blocage 24, comme illustré sur la figure 3.

Avantageusement, les éléments de blocage 24, sont répartis de façon régulière autour de l'arbre moteur 20, et l'angle entre deux éléments de blocage 24 successifs et l'axe de l'arbre moteur 20 est constant.

Typiquement, les éléments de blocage 24 sont disposés régulièrement sur le contour de l'arbre moteur 20 créant des configurations dites en « V » par rapport à l'axe longitudinal de l'arbre moteur 20 dans le plan transversal.

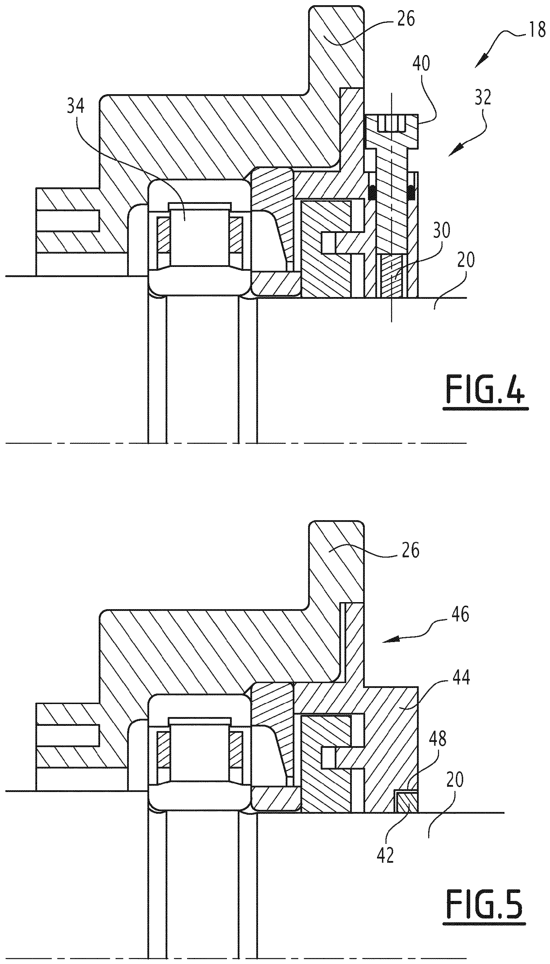

Sur la figure 4, l'arbre moteur 20 est mobile en rotation au travers du boîtier palier 26, et coopère avec un roulement 34 monté dans ce palier.

Les éléments de maintien 32 comprennent des vis 40 de pression déplaçables entre une position escamotée de libération des patins de contact 30 et une position active de maintien des patins 30 au contact de l'arbre moteur 20.

Comme cela est visible sur cette vue, les éléments de maintien 32 sont accessibles depuis l'extérieur du moteur 18, par exemple, aux opérateurs ou techniciens.

Les vis 40, sont maintenues en position dans des alésages, par exemple, par des joints toriques ou un produit frein-filet.

Dans une variante, les éléments de blocage coopèrent avec, par exemple, des trous taraudés.

La figure 5 est une vue, analogue à celle de la figure 4, d'une variante selon l'invention.

Dans cette variante, chaque patin de contact est un anneau torique 42 entourant l'arbre moteur 20.

Cet anneau torique 42 est maintenu en position par un élément de maintien 44 intégré au couvercle 46 du boîtier palier 26.

Le couvercle 46 comprend une surface 48 en contact avec l'anneau torique 42. Cette surface d'appui maintient en position l'anneau torique 42 contre l'arbre moteur 20.

L'anneau torique 42, par exemple, peut être complet, c'est-à-dire formé d'une pièce unique entourant l'arbre moteur 20 ou limité à un ou plusieurs secteurs angulaires.

Dans l'exemple illustré sur cette figure 5, le patin 30 comprend, par exemple, un matériau polymère, et est clipsable en force entre le couvercle 46 et l'arbre 20, au niveau de la surface de contact 48.

Le procédé d'installation d'un moteur 18 selon l'invention sur un bogie 10 de véhicule ferroviaire comprend les étapes suivantes :
- le montage du moteur 18 dans le bogie 10, les éléments de blocage 24 sont alors en position de blocage de l'arbre moteur 20, empêchant les débattements de l'arbre moteur 20 par rapport au carter 22.
- l'accouplement de l'arbre moteur 20 avec un dispositif d'entrainement du bogie 10 est alors réalisé,
- cet accouplement comprend une étape de déplacement de l'élément de blocage 24 de sa position de blocage à sa position escamotée, avant ou après l'accouplement.

De plus, la pression exercée sur les patins 30 par les vis de pression 40 crée une résistance à la rotation de l'arbre moteur 20 sans le bloquer. Cela permet une rotation périodique du moteur sans démontage des éléments de blocage jusqu'à la mise en service.

Selon un mode de réalisation, une étape de mise en rotation de l'arbre moteur 20 permet d'user les patins 30 et d'estomper la fonction de blocage des éléments de blocage 24.

On évite ainsi une étape manuelle pour faire passer les éléments de blocage 24 de la position de blocage à la position escamotée lors de la mise en service du bogie 10.

De préférence, les patins 30 sont réalisés en un matériau apte à s'user lors de la mise en rotation de l'arbre moteur 20 et à estomper la fonction de blocage des éléments de blocage 24. A titre d'exemple, les patins 30 sont réalisés en un matériau de type polymère qui s'use facilement sous l'effet du frottement.

L'étape de mise en rotation de l'arbre moteur 20 est alors une rotation forcée pour surmonter la force de blocage des éléments de blocage 24. Ainsi, la fonction de blocage des éléments de blocage 24 n'est pas altérée pendant le transport du moteur 18 avant la mise en service du bogie 10.

## Revendications

1. Moteur (18) de véhicule ferroviaire comprenant un arbre moteur (20) et un carter (22) de l'arbre moteur, l'arbre moteur (20) étant mobile en rotation par rapport au carter (22), le carter (22) comprenant au moins un élément de blocage (24) des mouvements de l'arbre moteur (20) par rapport au carter (22), ledit élément de blocage (24) étant mobile entre une position de blocage dans laquelle ledit élément de blocage (24) est appliqué contre l'arbre moteur (20) et empêche les débattements radiaux de l'arbre moteur (20) par rapport au carter (22) et une position escamotée dans laquelle l'élément est écarté de l'arbre moteur (20) et permet le mouvement de celui-ci par rapport au carter (22), dans lequel l'élément de blocage (24) comprend au moins un patin de contact (30) comprenant une surface en contact avec l'arbre moteur (20) ou avec une pièce liée en rotation à l'arbre moteur (20),
ledit patin (30) s'étend selon une direction sensiblement radiale autour de l'arbre moteur (20), l'élément de blocage (24) comprenant au moins un élément de maintien en position (32) de chaque patin (30), l'élément de maintien en position (32) comprenant une surface d'appui en contact avec le patin (30), ou l'élément de maintien en position (32) étant rigidement solidaire du patin (30), le ou chaque patin (30) est réalisé en un matériau apte à s'user lors de la mise en rotation de l'arbre moteur (20) et à estomper la fonction de blocage de l'élément de blocage (24)..

2. Moteur selon la revendication 1, dans lequel le patin de contact (30) comporte un anneau torique (42).

3. Moteur selon la revendication 1, dans lequel l'élément de maintien en position (32) comprend une surface d'appui en contact avec le patin (30).

4. Moteur selon la revendication 1 ou 3, dans lequel l'élément de maintien (32) comprend une vis (40), déplaçable entre une position escamotée de libération du patin de contact (30), et une position active de maintien du patin (30) au contact de l'arbre moteur (20).

5. Moteur selon l'une quelconque des revendications 1, 3 ou 4, dans lequel l'élément de maintien (32) est accessible depuis l'extérieur du moteur (18).

6. Moteur selon l'une quelconque des revendications 1 à 5, dans lequel il comporte une pluralité d'éléments de blocage (24) répartis de façon régulière autour de l'arbre moteur (20).

7. Procédé d'installation d'un moteur (18) selon l'une quelconque des revendications 1 à 6, sur un bogie (10) de véhicule ferroviaire comprenant les étapes suivantes :
- montage du moteur (18) dans le bogie (10), les éléments de blocage (24) étant en position de blocage de l'arbre moteur (20),
- accouplement de l'arbre moteur (20) avec un dispositif d'entrainement du bogie (10), le procédé est **caractérisé en ce qu'**il comprend une étape de déplacement de l'élément de blocage (24) de sa position de blocage à sa position escamotée, avant ou après accouplement, et une étape de mise en rotation de l'arbre moteur (20).

## Patentansprüche

1. Motor (18) für ein Schienenfahrzeug, aufweisend eine Motorwelle (20) und ein Gehäuse (22) für die Motorwelle, wobei die Motorwelle (20) bezüglich des Gehäuses (22) drehbewegbar ist, wobei das Gehäuse (22) wenigstens ein Element zur Sperrung (24) von Bewegungen der Motorwelle (20) bezüglich des Gehäuses (22) aufweist, wobei das Element zur Sperrung (24) bewegbar ist zwischen einer Sperrposition, in welcher das besagte Element zur Sperrung (24) gegen die Motorwelle (20) gedrückt ist und radiale Ausschläge der Motorwelle (20) bezüglich des Gehäuses (22) verhindert, und einer Zurückgezogen-Position, in welcher das besagte Element im Abstand von der Motorwelle (20) ist und die Bewegung dieser bezüglich des Gehäuses (22) erlaubt, wobei das Element zur Sperrung (24) aufweist wenigstens einen Kontaktschuh (30), der eine Fläche in Kontakt mit der Motorwelle (20) oder mit einem mit der Motorwelle (20) mitdrehverbundenen Teil aufweist, wobei sich der Schuh (30) entlang einer Richtung im Wesentlichen radial um die Motorwelle (20) erstreckt, wobei das Element zur Sperrung (24) aufweist wenigstens ein Element zum Halten (32) in Position jedes Schuhs (30), wobei das Element zum Halten (32) in Position aufweist eine Abstützfläche in Kontakt mit dem Schuh (30), oder wobei das Element zum Halten (32) in Position starr mit dem Schuh (30) verbunden ist, wobei der oder jeder Schuh (30) aus einem Material realisiert ist, das imstande ist, sich während des Drehbewegens der Motorwelle (20) abzunutzen und die Sperrfunktion des Elements zur Sperrung (24) vergehen zu lassen.

2. Motor gemäß Anspruch 1, wobei der Kontaktschuh (30) einen O-Ring (42) aufweist.

3. Motor gemäß Anspruch 1, wobei das Element zum Halten (32) in Position eine Abstützfläche in Kontakt mit dem Schuh (30) aufweist.

4. Motor gemäß Anspruch 1 oder 3, wobei das Element zum Halten (32) aufweist eine Schraube (40), die zwischen einer Eingezogen-Position zur Freigabe des Kontaktschuhs (30) und einer Aktiv-Position zum Halten des Schuhs (30) in Kontakt mit der Motorwelle (20) verlagerbar ist.

5. Motor gemäß irgendeinem der Ansprüche 1, 3 oder 4, wobei das Element zum Halten (32) von der Außenseite des Motors (18) aus zugänglich ist.

6. Motor gemäß irgendeinem der Ansprüche 1 bis 5, wobei er aufweist eine Mehrzahl von Elementen zur Sperrung (24), die in regelmäßiger Weise um die Motorwelle (20) herum verteilt sind.

7. Verfahren zur Installation eines Motors (18) gemäß irgendeinem der Ansprüche 1 bis 6 an einem Drehgestell (10) für ein Schienenfahrzeug, aufweisend die folgenden Schritte:
- Montieren des Motors (18) in das Drehgestell (10), wobei die Elemente zur Sperrung (24) in Position zum Sperren der Motorwelle (20) sind,
- Kuppeln der Motorwelle (20) mit einer Antriebsvorrichtung des Drehgestells (10), wobei das Verfahren **dadurch gekennzeichnet ist, dass** es aufweist einen Schritt des Verlagerns des Elements zur Sperrung (24) in dessen Position zum Sperren vor oder nach dem Kuppeln und einen Schritt des Drehbewegens der Motorwelle (20).

## Claims

1. Railway vehicle motor (18), comprising a driving shaft (20) and a casing (22) for the driving shaft, the driving shaft (20) being rotatable relative to the casing (22), the casing (22) comprising at least one blocking element (24) for blocking the movements of the driving shaft (20) relative to the casing (22), said blocking element (24) being movable between a blocking position in which said blocking element (24) is applied against the driving shaft (20) and prevents radial travel of the driving shaft (20) relative to the casing (22), and a retracted position in which the element is spaced apart from the driving shaft (20) and allows the driving shaft to move relative to the casing (22), wherein the blocking element (24) comprises at least one contact shoe (30) comprising a surface in contact with the driving shaft (20) or with a part that is connected in rotation to the driving shaft (20),
said shoe (30) extends in a substantially radial direction about the driving shaft (20), the blocking element (24) comprising at least one position-maintaining element (32) for maintaining each shoe (30) in position, the position-maintaining element (32) comprising a bearing surface in contact with the shoe (30), or the position-maintaining element (32) being rigidly secured to the shoe (30), the or each shoe (30) is made of a material capable of wearing when the driving shaft (20) is set in rotation and of diminishing the blocking function of the blocking element (24).

2. Motor according to claim 1, wherein the contact shoe (30) comprises an O-ring (42).

3. Motor according to claim 1, wherein the position-maintaining element (32) comprises a bearing surface in contact with the shoe (30).

4. Motor according to claim 1 or 3, wherein the maintaining element (32) comprises a screw (40) which is displaceable between a retracted position for freeing the contact shoe (30) and an active position for maintaining the shoe (30) in contact with the driving shaft (20).

5. Motor according to any one of claims 1, 3 or 4, wherein the maintaining element (32) is accessible from outside the motor (18).

6. Motor according to any one of claims 1 to 5, wherein it comprises a plurality of blocking elements (24) evenly distributed around the driving shaft (20).

7. Method for installing a motor (18) according to any one of claims 1 to 6 on a railway vehicle bogie (10), comprising the following steps:
- mounting the motor (18) in the bogie (10), the blocking elements (24) being in the position for blocking the driving shaft (20),
- coupling the driving shaft (20) with a device for driving the bogie (10), the method is **characterised in that** it comprises a step of moving the blocking element (24) from its blocking position to its retracted position, before or after coupling, and a step of setting the driving shaft (20) in rotation.
